# EUROPÄISCHE PATENTSCHRIFT

(11) **EP 3 459 666 B1**
(45) Veröffentlichungstag und Bekanntmachung des Hinweises auf die Patenterteilung: **12.08.2020**
(21) Anmeldenummer: 17020438.2
(22) Anmeldetag: 22.09.2017
(51) Int. Cl.: B23D 45/04, B23D 59/00, B23Q 11/00

(54) **SÄGE**
SAW
SCIE

(43) Veröffentlichungstag der Anmeldung: 27.03.2019
(73) Patentinhaber: Scheppach Fabrikation von Holzbearbeitungsmaschinen GmbH, 89335 Ichenhausen (DE)
(72) Erfinder: Bindhammer, Markus, 86316 Friedberg (DE)
(74) Vertreter: Patentanwälte Munk

(56) Entgegenhaltungen:
- EP-A1- 1 625 908
- EP-A1- 2 388 097
- DE-A1- 4 140 577
- US-A1- 2004 089 125

## Beschreibung

Die Erfindung betrifft eine Säge, insbesondere eine Kappsäge, Kapp-Gehrungs-Säge oder Kapp-Zug-Gehrungs-Säge gemäß dem Oberbegriff des Anspruchs 1.

Dementsprechend weist die Säge ein Maschinengestell und einen daran schwenkbar aufgenommenen Maschinenkopf auf, welcher das Sägeblatt trägt. Das Maschinengestell kann beispielsweise in Form eines mit einem Tisch oder einer Unterlage verbundenen Ständers ausgebildet sein, an dem der Maschinenkopf angelenkt ist und in eine von dem Tisch oder der Unterlage abgehobenen Ruhestellung vorgespannt sein kann, aus der er zum Sägen nach unten gedrückt wird.

Dabei ist herkömmlich meist ein Staubfangsack vorgesehen, der auf einen Absaugstutzen an einem das Sägeblatt oben abdeckenden Sägeblattschutz gesteckt wird, um Staub und Späne, die während des Schneidens entstehen, aufzufangen. Genutzt wird hier der Luftstrom, der durch das rotierende Sägeblatt entsteht. Staub und Späne werden mitgerissen und sammeln sich im Staubfangsack. Eine derartige Säge ist beispielsweise in der europäischen Patentanmeldung EP 1 990 121 A1 gezeigt.

Nachteilig dabei ist es, dass sich der Staubfangsack mit dem Maschinenkopf beim Einschwenken zum Sägen mitbewegt. Denn wenn der Maschinenkopf zum Sägen nach unten gedrückt wird, befindet sich der Staubfangsack beinahe in vertikaler Position oberhalb des Sägeblatts. Der Luftstrom reicht in dieser Position oft nicht mehr aus, um Staub und Späne in den Staubfangsack zu befördern und dort auch zu halten.

Die US-Patentanmeldung US 2004/0089125 A1 offenbart daher schon einen Staubfangsack, der an einem Bett ortsfest und in Form gehalten am Maschinengestell montiert ist und deshalb auch bei einem Verschwenken des Maschinenkopfs nach unten nicht mitverschwenkt. Die nötige Beweglichkeit liefert dabei ein flexibler Anschlusshals des Staubfangsacks, an dem das in einen Bereich des Sägeblatts führende Staubabfuhrrohr angeschlossen ist, welches dann beim Herunterdrücken des Maschinenkopfs von der Sägeblattabdeckung weggedrückt wird.

Die europäische Patentanmeldung EP 1 625 908 A1 offenbart eine Kapp-Zug-Gehrungssäge mit einem an der Sägeblattabdeckung angeschlossenen, flexiblen Schlauch, der zu einem Zyklon führt, welcher in einen darunter angeordneten Staubfangbehälter mündet. Der Staubfangbehälter ist dabei an zwei an einem Maschinengestell linearverschieblich aufgenommenen Auszugarmen befestigt, an deren dem Staubfangbehälter abgewandten Ende ein ein Sägeblatt tragender Maschinenkopf angelenkt ist. Wird nun der Maschinenkopf beim Sägen verschoben, so wird der Staubfangbehälter mitverschoben. Beim Verschwenken des Maschinenkopfs aus seiner Ruhestellung oberhalb des Werkstücks in seine abgesenkte Arbeitsstellung bleibt der Staubfangbehälter dagegen in Ruhe, da der der Staubfangbehälter im Gegensatz zum Maschinenkopf drehfest an der Linearführung angebracht ist, wobei der sich vergrößernde Abstand mittels der Flexibilität des Schlauchs ausgeglichen wird.

Ein weiterer Lösungsversuch besteht in der Verwendung schwenkbar ineinander eingreifender und teleskopierbarer Abschnitte der Saugleitung. Eine derartige Anordnung zeigt die europäische Patentschrift EP 2 377 636 B1. Diese zeigt eine Kapp-Zug-Säge mit einem feststehend angeordneten Staubauffangbehälter und beweglichem Maschinenkopf mit Sägeblatt, wobei beide mit der auf vorstehend beschriebene Art flexiblen Saugleitung miteinander verbunden sind.

Hiervon ausgehend stellt sich die Aufgabe, eine alternative Lösung zur Überwindung der eingangs geschilderten Nachteile herkömmlicher Sägen der gattungsgemäßen Art zu finden.

Diese Aufgabe wird mit den Merkmalen des Anspruchs 1 gelöst.

Bei einer Säge, insbesondere einer Kappsäge, Kapp-Zug-Säge oder Kapp-Zug-Gehrungs-Säge, mit einem an einem Maschinengestell in einer vertikalen Ebene schwenkbeweglich angebrachten Maschinenkopf, welcher zum Sägen aus einer Ruhestellung nach unten drückbar am Maschinengestell aufgenommen ist und ein zum Sägen rotierendes Sägeblatt trägt, und mit einer Staubaufnahme, die zur Aufnahme der während des Sägens anfallenden Späne und Stäube dient und die mit einem Anschlussstutzen an einer oberhalb des Sägeblatts am Maschinenkopf angebrachten Sägeblattabdeckung verbunden ist, ist erfindungsgemäß an dem Maschinengestell eine Linearführung vorgesehen, in der ein Schlitten verschiebbar aufgenommen ist, auf dem die Staubaufnahme angeordnet ist, welche über eine biegsame beziehungsweise flexible Verbindungsleitung mit dem Anschlussstutzen verbunden ist.

Dabei sitzt die Staubaufnahme erfindungsgemäß so auf oder in dem Schlitten, der entlang der Linearführung am Maschinengestell verschiebbar angebracht ist, dass die Staubaufnahme bei Herunterdrücken des Maschinenkopfs nicht in eine vertikale Stellung oberhalb des Sägeblatts verkippt wird sondern eine lineare Verschiebebewegung macht. Die Biegsamkeit beziehungsweise Flexibilität der Verbindungsleitung zwischen dem Absaugstutzen und der Staubaufnahme gleicht dabei weiterhin erfindungsgemäß die unterschiedlichen Bewegungsrichtungen des nach unten verschwenkten Maschinenkopfs beziehungsweise der Sägeblattabdeckung einerseits und der Staubaufnahme andererseits aus. Die Verbindungsleitung ist dabei also so biegsam, dass sie beim Verschwenken des Maschinenkopfs nicht knickt, sondern die Staubaufnahme zieht beziehungsweise drückt.

Die Staubaufnahme ist also einerseits linearbeweglich an dem Maschinengestell angelenkt, wohingegen der das Sägeblatt tragende Maschinenkopf andererseits an dem Maschinengestell angelenkt ist, so dass die Staubaufnahme und der Maschinenkopf gegenüber dem Maschinengestell Bewegungen mit unterschiedlichen Bewegungsrichtungen ausführen, wenn der Maschinenkopf zum Sägen nach unten gedrückt wird, nämlich eine Linearverschiebung der Staubaufnahme gegenüber dem Maschinengestell und dem daran angelenkten Maschinenkopf und eine Schwenkbewegung des Maschinenkopfs gegenüber dem Maschinengestell und der daran linear verschieblich angebrachten Staubaufnahme. Die flexible Verbindungsleitung verbindet dabei den Maschinenkopf mit der Staubaufnahme und gleicht die Längenveränderung aufgrund der unterschiedlichen Bewegungsrichtungen aus.

Vorteilhafte Weiterbildungen sind Gegenstand der Unteransprüche.

So ist es im Hinblick auf eine einfache Beweglichkeit und eine geringe zur Spanabsaugung nötige Luftzufuhr vorteilhaft, wenn die Linearführung so angeordnet ist, dass sie bei auf einer horizontalen Unterlage aufsitzendem Maschinengestell horizontal verläuft.

Der Schlitten kann dabei als Rahmen ausgebildet sein, welcher die als forminstabiler Staubfangsack ausgebildete Staubaufnahme mehrseitig umgibt. Dadurch kann der forminstabile Staubfangsack aufgespannt und in aufgespannter Form gehalten werden.

Alternativ dazu kann die Staubaufnahme als formstabiler Behälter ausgebildet sein, beispielsweise als Kunststoffbehälter, so dass ein solches Aufspannen und damit der Rahmen nicht unbedingt nötig ist. Der Schlitten kann dann einfach aus einer Unterlage für den vorzugsweise aus Kunststoff ausgeformten Behälter bestehen. Andererseits wäre es auch denkbar, den Schlitten und den Behälter einstückig auszubilden. Auch bei einem formstabilen Behälter wäre jedoch ein ihn mehrseitig umgebender Rahmen denkbar.

Dabei kann der formstabile Behälter zur Entnahme der aufgefangenen Späne eine abnehmbare Seitenwand oder eine mit einer Klappe verschließbare Zugriffsöffnung aufweisen, insbesondere an seiner Unterseite. Eine vorteilhafte Ausbildung wäre beispielsweise eine in zwei Nuten geführte Schublade beziehungsweise Verschlussplatte.

Die Linearführung kann dabei zwei parallele Führungsnuten aufweisen, beispielsweise in Form von zwei Führungsschienen, die am oder nahe des Schwenkgelenks, an dem der Maschinenkopf verschwenkbar am Maschinengestell angebracht ist, ortsfest am Maschinengestell angebracht sind und jeweils eine Längsnut aufweisen. Der Schlitten kann dann vier Zapfen oder Führungskörper aufweisen, je zwei an seinem vorderen und an seinem hinteren Ende, welche voneinander weg abstehen und mit ihren freien Enden nach außen hin in die dortige Führungsnut hineinragen und somit dort geführt werden. Dadurch ist sichergestellt, dass der Schlitten und damit der darauf angebrachte Behälter oder Staubfangsack eine rein translatorische Bewegung durchführen.

Die Flexibilität beziehungsweise Biegsamkeit der Verbindungsleitung kann dabei beispielsweise dadurch hergestellt werden, dass sie als Faltenrohr beziehungsweise Faltenbalg oder Gummischlauch ausgebildet ist.

Insbesondere bei einer als Staubaufnahmesack ausgebildeten Staubaufnahme kann dabei ein Reißverschluss vorgesehen sein, um Zugriff auf das Innere der Staubaufnahme zum Ausleeren zu gewähren.

Die Staubaufnahme kann dabei horizontal schwenkbar und gegen horizontales Verschwenken lösbar gesichert in dem Rahmen aufgenommen sein. Beispielsweise könnten zwischen zwei vertikalen Rahmenstreben vor und hinter der vorzugsweise als Staubfangsack gestalteten Staubaufnahme Drehgelenke angebracht sein, an denen die Staubaufnahme horizontal drehbar beziehungsweise schwenkbar an dem Rahmen angebracht ist. Der Reißverschluss könnte sich dann an einer Stelle des Staubfangsacks befinden, der im Einsatzfall der Säge unten im dem Schlittenboden zugewandten Bereich angeordnet und dadurch geschützt ist. Zum Leeren des Staubfangsacks kann dieser dann horizontal ausgeschwenkt werden, bis der Reißverschluss zugänglich ist.

Weiterhin vorteilhaft ist es, insbesondere bei einem als Kunststoffbehälter ausgebildeten und daher zunächst luftundurchlässigen Staubfangbehälter, wenn eine zusätzliche Gebläseeinheit, beispielsweise in Form eines handelsüblichen PC-12V-Lüfters vorgesehen ist, welche einen Luftzug durch die Staubaufnahme erzeugt, wozu die als Kunststoffbehälter ausgebildete Staubaufnahme vorteilhaft eine der Gebläseeinheit zugeordnete Öffnung aufweist, welche mittels eines Filterelements und/oder eines oder mehrerer Ablenkelemente, wie beispielsweise einer Ablenkplatte, verdeckt ist. Auch am Einlass des Staubaufnahmebehälters kann eine solche Prallplatte beziehungsweise Ablenkplatte vorgesehen sein, um den Luftstrom zunächst zum Boden des Behälters hin zu lenken.

Die Verbindungsleitung kann dabei vorteilhaft über einen Dreh- oder Klemmring direkt mit der Staubaufnahme oder mit dem die Staubaufnahme tragenden Rahmen verbunden sein, wobei sich der Ring öffnen und schließen lässt, um die Verbindungsleitung einerseits von der Staubaufnahmeeinheit andererseits (bestehend aus dem Schlitten und der Staubaufnahme) zu trennen. Es wäre auch denkbar, den Drehring auf der horizontalen Schwenkachse des Staubfangsacks aufzusetzen, so dass dieser gleichzeitig zum horizontalen Ausschwenken des Staubfangsacks in die Entnahmestellung verwendet werden kann.

Vorteilhaft ist die Staubaufnahme dabei auf dem Schlitten lösbar befestigt und somit abnehmbar, insbesondere wenn es sich um eine als formstabilen Behälter ausgebildete Staubaufnahme handelt, so dass sie sich leicht entleeren lässt.

In den beiliegenden Zeichnungen werden vorteilhafte Ausführungsformen der Erfindung dargestellt. Es zeigen:
- Figur 1: eine perspektivische Ansicht einer Säge gemäß einer vorteilhaften Ausführungsform der Erfindung in Ruhestellung;
- Figur 2: die in Figur 1 gezeigte Säge in Sägestellung;
- Figur 3: eine perspektivische Teilansicht der in Figur 1 und 2 in Ruhestellung gezeigten Säge bei zur Leerung ausgeschwenktem Staubfangsack;
- Figur 4: eine perspektivische Ansicht einer Säge gemäß einer weiteren Ausführungsform der Erfindung in Sägestellung;
- Figur 5: eine weitere perspektivische Ansicht der in Figur 4 gezeigten Säge in Sägestellung von der rückwärtigen Seite aus;
- Figur 6: eine perspektivische Teilansicht der Rückseite der in den Figuren 4 und 5 gezeigten Säge; und
- Figur 7: die in den Figuren 4 bis 6 gezeigte Säge bei abgenommenem Staubfang behälter.

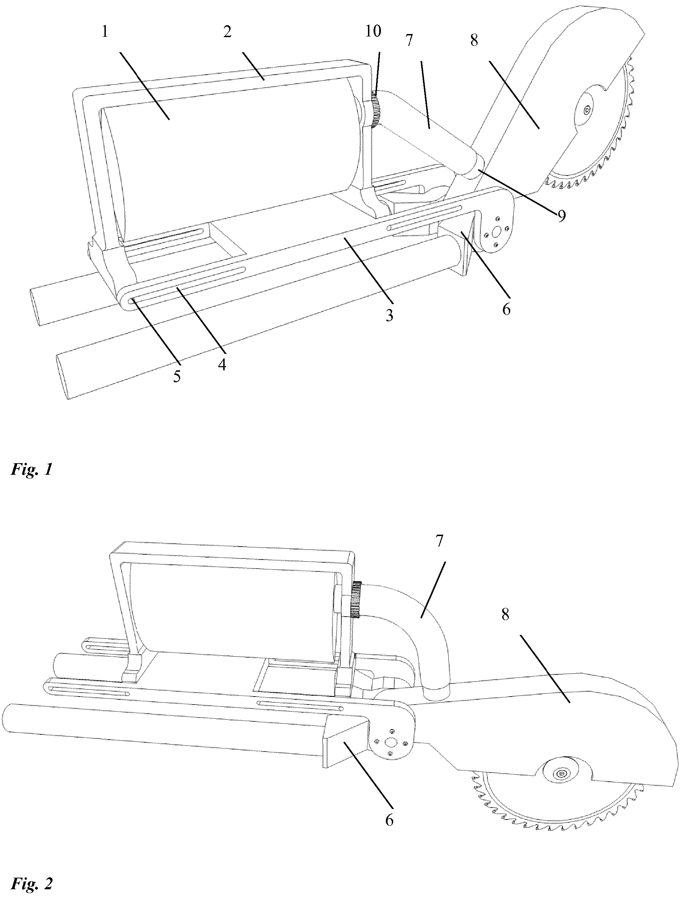

Zunächst wird Bezug genommen auf die Figur 1, welche eine Kappsäge mit einem nur teilweise gezeigten, mit 6 bezeichneten Maschinengestell und einem daran angelenkten Maschinenkopf zeigt, welcher Maschinenkopf ein Sägeblatt mit einer oberseitigen Sägeblattabdeckung 8 trägt. Zum Sägen wird der Maschinenkopf mit dem Sägeblatt dabei aus der in der Figur 1 gezeigten, angehobenen Stellung nach unten in die in Figur 2 gezeigte Sägestellung verschwenkt. Die Sägeblattabdeckung 8 weist dabei einen Anschlussstutzen 9 auf, an dem eine zu einem Staubfangsack 1 führende Verbindungsleitung 7 führt.

Um die nötige Bewegungsfreiheit des Maschinenkopfs sicherzustellen und gleichzeitig ein Mitverschwenken des Staubfangsacks 1 mit dem Maschinenkopf zu vermeiden, ist dabei eine am Maschinengestell 6 angebrachte Linearführung 3, bestehend aus zwei Führungsschienen mit vier Führungsnuten beziehungsweise Langlöchern 4 vorgesehen, sowie ein darin verschiebbar geführter Schlitten, der als den Staubfangsack 1 tragender Rahmen 2 gestaltet ist und an seinem vorderen und hinteren Ende jeweils ein Paar von in den beiden Führungsschienen geführten Zapfen 5 aufweist. Die beiden die Linearführung 3 bildenden Führungsschienen können dabei an den Außenseiten des Gelenkkopfs des Maschinengestells 6 angebracht sein, an dem der das Sägeblatt tragende Maschinenkopf angelenkt ist.

Die den Staubfangsack 1 mit dem Maschinenkopf beziehungsweise dem Anschlussstutzen 9 am Sägeblattschutz 8 verbindende Verbindungsleitung 7 kann dabei als Faltenbalg beziehungsweise Faltenrohr oder, wie dargestellt, als Gummischlauch ausgebildet sein, so dass es bei einer Aufwärts- oder Abwärtsbewegung des Maschinenkopfs nicht abknickt, sondern aufgrund seiner Biegsamkeit beziehungsweise Flexibilität einfach etwas nachgibt, aber die Schwenkbewegung des Maschinenkopfs in eine Translationsbewegung des zusammen mit dem Rahmen 2 eine Staubfangeinheit bildenden Staubfangsacks 1 entlang der Linearführung 3 übersetzt.

Wird der Maschinenkopf nach unten gedrückt, so zieht die flexible Verbindungsleitung 7 den Staubfangsack 1 in dem Rahmen 2 horizontal in Richtung zum Maschinenkopf hin (Figur 2). Wird der Maschinenkopf wieder in seine Ausgangsposition zurückgeführt, so schiebt die Verbindungsleitung 7 den Staubfangsack 1 und den Rahmen 2 horizontal wieder in ihre Ausgangsposition (Figur 1).

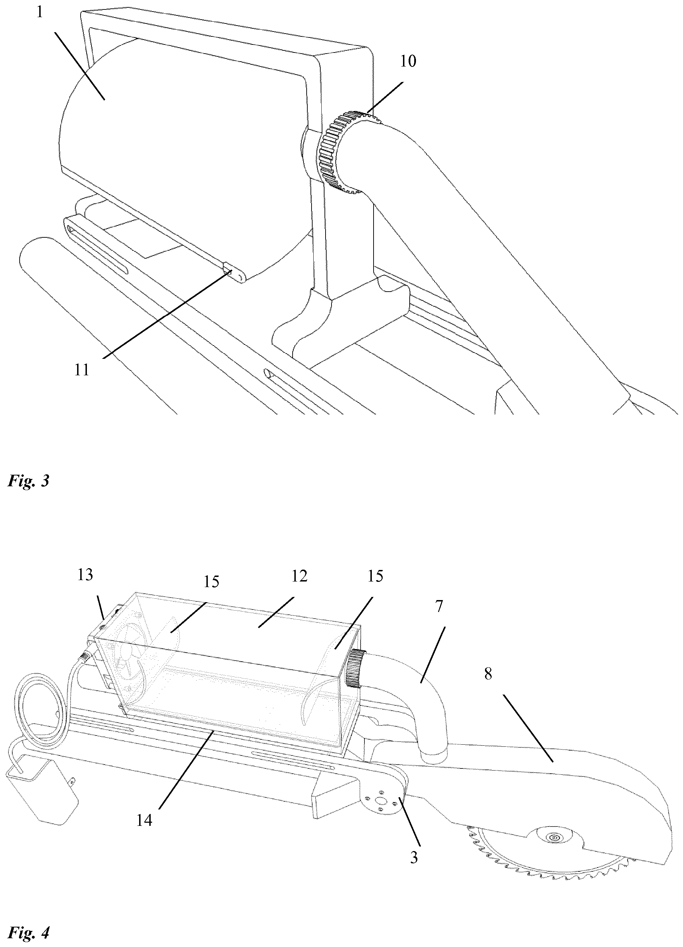

Um den Staubfangsack 1 zu entleeren, lässt sich dieser aus seiner in der Figur 1 gezeigten Arbeitsstellung in eine in Figur 3 gezeigte, demgegenüber horizontal verschwenkte Leerungsstellung verdrehen. Dazu ist ein mit einer den Staubfangsack 1 horizontal drehbar beziehungsweise verschwenkbar tragenden Achse verbundener Drehring 10 vorgesehen, mit dem sich der Staubfangsack 1 aus seiner in Figur 1 gezeigten Arbeitsstellung in die in Figur 3 gezeigte Leerungsstellung und zurück verschwenken lässt. An seiner in Arbeitsstellung unten gelegenen Seite weist der Staubfangsack 1 dabei einen sich vorzugsweise über seine gesamte Länge erstreckenden Reißverschluss 11 auf, der sich zum Leeren des Staubfangsacks öffnen lässt.

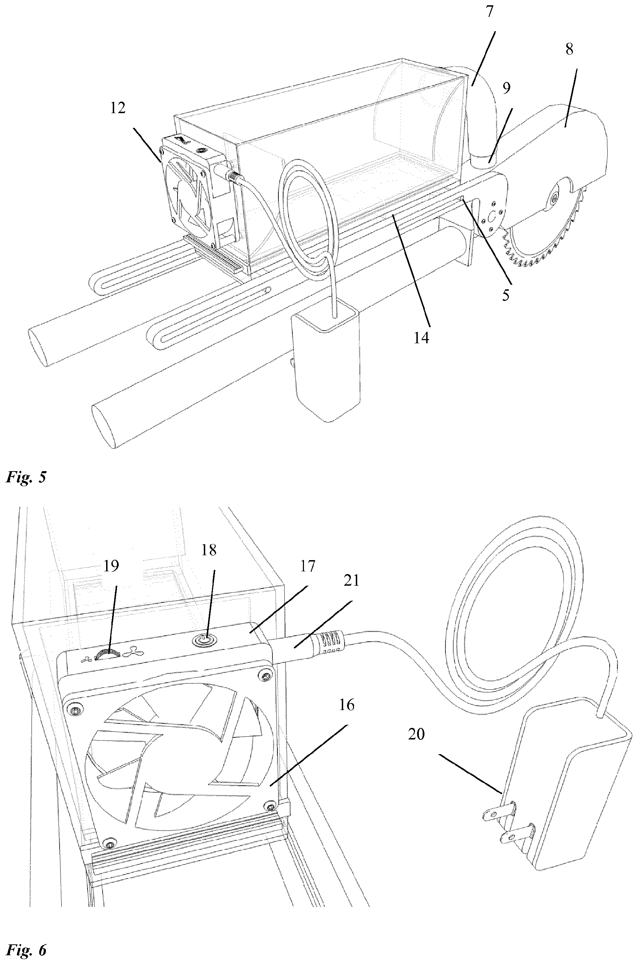

Eine weitere Ausführungsform der Erfindung ist in den Figuren 4 bis 7 dargestellt. Dabei ist der bei der in den Figuren 1 bis 3 gezeigten Ausführungsform vorgesehene, forminstabile und daher über einen Rahmen 2 gehaltene Staubfangsack 1 durch einen formstabilen, vorteilhaft quaderförmigen Behälter 12 ersetzt, der weiterhin vorteilhaft aus transparentem und schlagfestem Kunststoff bestehen kann. Anstatt eines den forminstabilen Staubfangsack mehrseitig umgebenden Rahmens kann hier ein Schlitten 14 vorgesehen sein, auf dem der Staubfangbehälter 12 einfach aufgestellt und auf fachnotorisch bekannte Art dort befestigt ist, beispielsweise über Klipsverbindungen oder dergleichen. Der lediglich eine Bodenplatte anstatt eines Rahmens aufweisende Schlitten 14 kann dann wiederum über vier Zapfen 5 in einer Linearführung 3 geführt sein, die ebenso wie die Verbindungsleitung 7 derjenigen aus der bereits im Zusammenhang mit den Figuren 1 bis 3 erläuterten Ausführungsform der Erfindung entspricht.

Am dem Maschinenkopf abgewandten, also rückseitigen Ende des Kunststoffbehälters ist dabei eine Gebläseeinheit 13 in Form eines gewöhnlichen 12 V-Gleichstrom PC-Lüfters 16 mit einer Steuereinheit 17, einem Ein-Ausschalter 18 und einem Drehzahlregler 20 angebracht, die durch eine kreisrunde Öffnung in der Rückseite des Staubfangbehälters 12 einen zusätzlichen Luftstrom durch den Staubfangbehälter 12 hindurch erzeugt. Gespeist werden der PC-Lüfter 16 und die Steuereinheit 17 beispielsweise über einen Wandtransformator 20, der die notwendige Gleichspannung liefert. Der Wandtransformator 20 besitzt einen entsprechenden Stecker 21, der mit einer Anschlussbuchse der Gebläseeinheit 13 verbunden ist. Alternativ wäre auch eine batterie- beziehungsweise akkubetriebene Variante der Gebläseeinheit denkbar.

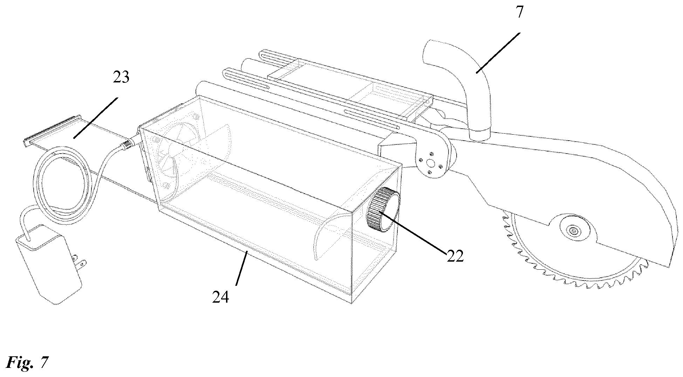

Der Staubfangbehälter 12 ist über einen Klemmring 22 mit der flexiblen Verbindungsleitung 7 verbunden. Wird der Klemmring 22 entsprechend gedreht, so lässt sich die Verbindungsleitung 7 abziehen. Der Staubfangbehälter 12 kann dann vom Schlitten 14 abgenommen werden, wie in Figur 7 gezeigt, um den Staubfangbehälter 12 zu entleeren. Dazu weist der Staubfangbehälter eine als Schublade 23 ausgestaltete Unterseite auf, welche in zwei Längsnuten 24 in den vertikalen Seitenwänden des Staubfangbehälters 12 geführt ist, so dass der Staubfangbehälter 12 entleert werden kann.

Der Staubfangbehälter 12 weist des Weiteren zwei kurvenförmig gebogene Ablenkplatten 15 auf (Figur 4), die verhindern, dass Staub und Späne direkt durch das zur Gebläseöffnung 13 führende Loch in der Rückwand hindurch wieder nach draußen geblasen werden.

Abwandlungen und Modifikationen der gezeigten Ausführungsformen sind möglich, im Rahmen der beigefügten Ansprüche.

## Patentansprüche

1. Säge, insbesondere Kappsäge, Kapp-Zug-Säge oder Kapp-Zug-Gehrungs-Säge, mit einem an einem Maschinengestell (6) in einer vertikalen Ebene schwenkbeweglich angebrachten Maschinenkopf, welcher zum Sägen aus einer Ruhestellung nach unten drückbar am Maschinengestell (6) aufgenommen ist und ein zum Sägen rotierendes Sägeblatt trägt, und mit einer Staubaufnahme, die zur Aufnahme der während des Sägens anfallenden Späne und Stäube dient und die mit einem Anschlussstutzen (9) an einer oberhalb des Sägeblatts am Maschinenkopf angebrachten Sägeblattabdeckung (8) verbunden ist, wobei die Staubaufnahme auf einem in einer Linearführung (3) verschiebbar aufgenommenen Schlitten angeordnet ist, und wobei die Staubaufnahme über eine biegsame Verbindungsleitung mit dem Anschlussstutzen (9) verbunden ist,
**dadurch kennzeichnet, dass**
die Linearführung (3) so an dem Maschinengestell (6) vorgesehen ist, dass bei Herunterdrücken des Maschinenkopfs die Staubaufnahme nicht in eine vertikale Stellung oberhalb des Sägeblatts verkippt wird, sondern eine lineare Verschiebebewegung macht, wobei sich beim Herunterdrücken des Maschinenkopfs die Sägeblattabdeckung (8) einerseits und der Staubaufnahme andererseits gegenüber dem Maschinengestell bewegen, wobei die Biegsamkeit beziehungsweise Flexibilität der Verbindungsleitung zwischen dem Anschlussstutzen und der Staubaufnahme die unterschiedlichen Bewegungsrichtungen ausgleicht.

2. Säge nach Anspruch 1, **dadurch kennzeichnet, dass** die Linearführung (3) so angeordnet ist, dass sie bei auf einer horizontalen Unterlage aufsitzendem Maschinengestell (6) horizontal verläuft.

3. Säge nach Anspruch 1 oder 2, **dadurch kennzeichnet, dass** der Schlitten als Rahmen (2) ausgebildet ist, welcher die als forminstabiler Staubfangsack (1) ausgebildete Staubaufnahme mehrseitig umgibt.

4. Säge nach Anspruch 1 oder 2, **dadurch kennzeichnet, dass** die Staubaufnahme als formstabiler Behälter (12) insbesondere aus Kunststoff ausgebildet ist und einstückig mit dem Schlitten oder auf dem Schlitten (14) angeordnet ist.

5. Säge nach Anspruch 4, **dadurch kennzeichnet, dass** der Behälter eine abnehmbare Seitenwand aufweist, insbesondere an seiner Unterseite, vorzugsweise in Form einer in zwei Nuten (24) geführten Schublade (23).

6. Säge nach einem der vorhergehenden Ansprüche, **dadurch kennzeichnet, dass** die Linearführung (3) zwei parallele Führungsnuten (4) aufweist und der Schlitten je zwei an seinen vorderen und hinteren Enden voneinander weg abstehende Zapfen (5), die in die beiden Führungsnuten (4) hineinragen.

7. Säge nach einem der vorhergehenden Ansprüche, **dadurch kennzeichnet, dass** die Verbindungsleitung als Faltenbalg (6) oder Gummischlauch ausgebildet ist.

8. Säge nach einem der vorhergehenden Ansprüche, **dadurch kennzeichnet, dass** ein zur Staubentnahme dienender Reißverschluss (11) an der Staubaufnahme angebracht ist.

9. Säge nach Anspruch 8, **dadurch kennzeichnet, dass** die Staubaufnahme horizontal schwenkbar und gegen horizontales Verschwenken lösbar gesichert in dem Rahmen (2) aufgenommen ist, wobei der Reißverschluss (11) in einer ausgeschwenkten Entnahmestellung der Staubaufnahme zugänglich ist und in einer Arbeitsstellung nicht.

10. Säge nach einem der vorhergehenden Ansprüche, **dadurch kennzeichnet, dass** eine Gebläseeinheit (13), beispielsweise ein 12V-Lüfter, vorgesehen ist, welche einen Luftzug durch die Staubaufnahme erzeugt, wobei die Gebläseeinheit vorzugsweise auf der dem Sägeblatt abgewandten Seite der Staubaufnahme, angeordnet ist.

11. Säge nach Anspruch 10, **dadurch kennzeichnet, dass** die Staubaufnahme eine der Gebläseeinheit (13) zugeordnete Öffnung aufweist, welche mittels eines Filterelements und/oder eines Ablenkelements (15) verdeckt ist.

12. Säge nach einem der vorhergehenden Ansprüche, **dadurch kennzeichnet, dass** die Verbindungsleitung über einen öffnen- und schließbaren Klemm- oder Drehring (22) mit der Staubaufnahme verbunden ist.

13. Säge nach einem der vorhergehenden Ansprüche, **dadurch kennzeichnet, dass** die Staubaufnahme auf dem Schlitten lösbar befestigt und daher abnehmbar ist.

## Claims

1. Saw, in particular a cross-cut saw, cross-cut slide saw or slide compound mitre saw, having a machine head which is mounted on a machine frame (6) so as to be pivotable in a vertical plane and which is mounted on the machine frame (6) so as to be, for sawing, pressable downwards from a rest position and carries a saw blade rotating for sawing, and having a dust collector, which serves to receive the chips and dust produced during sawing and which is connected to a connection socket (9) on a saw blade cover (8) mounted above the saw blade on the machine head, wherein the dust collector is arranged on a carriage displaceably received in a linear guide (3), and wherein the dust collector is connected to the connection socket (9) via a flexible connecting line,
**characterized in that**
the linear guide (3) is provided on the machine frame (6) in such a way that when the machine head is pressed down, the dust collector is not tilted into a position vertically above the saw blade, but makes a linear displacement movement, wherein when the machine head is pressed down the saw blade cover (8) on the one hand and the dust collector on the other hand move relative to the machine frame, and wherein the bendability or flexibility of the connecting line between the connection socket and the dust collector compensates for the different directions of movement.

2. Saw according to claim 1, **characterized in that** the linear guide (3) is arranged so that it runs horizontally when the machine frame (6) rests on a horizontal support.

3. Saw according to claim 1 or 2, **characterized in that** the carriage is constructed as a frame (2) which surrounds the dust collector on several sides, wherein the dust collector is designed as a dimensionally unstable dust collection bag (1).

4. Saw according to Claim 1 or 2, **characterized in that** the dust collector is formed as a dimensionally stable container (12), in particular of plastic, and is arranged in one piece with the carriage or on the carriage (14).

5. Saw according to claim 4, **characterized in that** the container has a removable side wall, in particular on its underside, preferably in the form of a drawer (23) guided in two grooves (24).

6. Saw according to one of the preceding claims, **characterized in that** the linear guide (3) has two parallel guide grooves (4) and the carriage has two journals (5) at its front and rear end, respectively, projecting away from one another and projecting into the two guide grooves (4).

7. Saw according to one of the preceding claims, **characterized in that** the connecting line is designed as a bellows (6) or rubber hose.

8. Saw according to one of the preceding claims, **characterized in that** a zipper (11) for removing dust is attached to the dust collector.

9. Saw according to claim 8, **characterized in that** the dust collector is mounted in the frame (2) so as to be horizontally pivotable and detachably secured against horizontal pivoting, the zipper (11) being accessible in a swung out removal position of the dust collector and not in an operating position.

10. Saw according to one of the preceding claims, **characterized in that** a blower unit (13), for example a 12V fan, is provided, which generates a draft of air through the dust collector, the blower unit preferably being arranged on the side of the dust collector facing away from the saw blade.

11. Saw according to claim 10, **characterized in that** the dust collector has an opening associated with the blower unit (13) which is covered by a filter element and/or a deflector element (15).

12. Saw according to one of the preceding claims, **characterized in that** the connecting line is connected to the dust collector via an openable and closeable clamping or rotating ring (22).

13. Saw according to one of the previous requirements, **characterized in that** the dust collector is detachably attached to the carriage and is therefore removable.

## Revendications

1. Scie, en particulier scie à tronçonner, scie à tronçonner et passe-partout ou scie à tronçonner, passe-partout et à onglets, comprenant une tête de machine qui est montée de manière mobile en pivotement dans un plan vertical sur un bâti de machine (6) et qui, pour le sciage, est reçue sur ledit bâti de machine (6) de manière à pouvoir être poussée vers le bas à partir d'une position de repos et porte une lame de scie rotative pour le sciage, ainsi qu'un récipient à poussière qui sert à recevoir les copeaux et les poussières produits pendant le sciage et qui est relié à une tubulure de raccordement (9) sur une couverture de lame de scie (8) montée au-dessus de la lame de scie sur la tête de la machine, dans laquelle ledit récipient à poussière est disposé sur un chariot reçu à coulissement dans un guide linéaire (3), et dans laquelle ledit récipient à poussière est relié à la tubulure de raccordement (9) par une conduite de liaison flexible,
**caractérisée par le fait que**
le guide linéaire (3) est prévu sur le bâti de machine (6) de telle sorte que, lorsque la tête de machine est poussée vers le bas, le récipient à poussière n'est pas basculé dans une position verticale au-dessus de la lame de scie, mais exerce un mouvement de déplacement linéaire, dans laquelle, lorsque la tête de machine est poussée vers le bas, la couverture de lame de scie (8) d'une part et le récipient à poussière d'autre part se déplacent par rapport au bâti de machine, la souplesse ou bien la flexibilité de la conduite de liaison entre la tubulure de raccordement et le récipient à poussière compensant les différentes directions de déplacement.

2. Scie selon la revendication 1, **caractérisée par le fait que** le guide linéaire (3) est agencé de manière à ce qu'il s'étende horizontalement lorsque le bâti de machine (6) repose sur un support horizontal.

3. Scie selon la revendication 1 ou 2, **caractérisée par le fait que** le chariot est conçu en tant que cadre (2) qui entoure de plusieurs côtés le récipient à poussière réalisé en tant que sac collecteur de poussière (1) de forme instable.

4. Scie selon la revendication 1 ou 2, **caractérisée par le fait que** le récipient à poussière est réalisé en tant que récipient (12) de forme stable, en particulier en matière plastique, et est disposé d'un seul tenant avec le chariot ou sur le chariot (14).

5. Scie selon la revendication 4, **caractérisée par le fait que** le récipient présente une paroi latérale détachable, en particulier sur sa face inférieure, de préférence sous la forme d'un tiroir (23) guidé dans deux rainures (24).

6. Scie selon l'une quelconque des revendications précédentes, **caractérisée par le fait que** le guide linéaire (3) présente deux rainures de guidage (4) parallèles, et le chariot présente respectivement deux tenons (5) qui font saillie de manière opposée l'une à l'autre à ses extrémités avant et arrière et qui se projettent dans les deux rainures de guidage (4).

7. Scie selon l'une quelconque des revendications précédentes, **caractérisée par le fait que** la conduite de liaison est réalisée en tant que soufflet (6) ou comme tuyau flexible en caoutchouc.

8. Scie selon l'une quelconque des revendications précédentes, **caractérisée par le fait qu'**une fermeture à glissière (11) servant à faire sortir les poussières est montée sur le récipient à poussière.

9. Scie selon la revendication 8, **caractérisée par le fait que** le récipient à poussière est apte à pivoter horizontalement et est reçu dans le cadre (2) de manière à être fixé de manière amovible contre un pivotement horizontal, la fermeture à glissière (11) étant accessible dans une position de retrait du récipient à poussière où il est pivoté vers l'extérieur, et n'étant pas accessible dans une position de travail.

10. Scie selon l'une quelconque des revendications précédentes, **caractérisée par le fait qu'**une unité de soufflante (13), par exemple un ventilateur à 12 V, est prévue qui génère un courant d'air à travers ledit récipient à poussière, dans laquelle l'unité de soufflante est disposée de préférence sur le côté du récipient à poussière qui montre dans la direction opposée à la lame de scie.

11. Scie selon la revendication 10, **caractérisée par le fait que** le récipient à poussière présente une ouverture associée à l'unité de soufflante (13), qui est recouverte au moyen d'un élément filtrant et/ou d'un élément déflecteur (15).

12. Scie selon l'une quelconque des revendications précédentes, **caractérisée par le fait que** la conduite de liaison est reliée au récipient à poussière par l'intermédiaire d'une bague de serrage ou de rotation (22) apte à être ouverte et refermée.

13. Scie selon l'une quelconque des revendications précédentes, **caractérisée par le fait que** le récipient à poussière est fixé de manière amovible au chariot et est donc détachable.
